# EUROPEAN PATENT SPECIFICATION

(11) **EP 0 251 776 B1**
(45) Date of publication and mention of the grant of the patent: **26.05.1993**
(21) Application number: 87305809.3
(22) Date of filing: 01.07.1987
(51) Int. Cl.: H02P 8/00, B41J 19/78

(54) **Method of controlling a line-feed stepping motor in a printer and a driver circuit therefor**
Verfahren zur Regelung eines Zeilenvorschub-Schrittmotors in einem Drucker und Antriebsschaltung dafür
Méthode pour commander un moteur pas à pas d'avancement d'interligne dans une imprimante et son circuit d'actionnement

(30) Priority: 01.07.1986 JP 152801/86
(43) Date of publication of application: 07.01.1988
(73) Proprietor: Oki Electric Industry Company, Limited, Tokyo 105 (JP)
(72) Inventor: Tanuma, Jiro Oki Electric Industry Co., Ltd., Tokyo (JP); Uchida, Takao Oki Electric Industry Co., Ltd., Tokyo (JP); Komori, Chihiro Oki Electric Industry Co., Ltd., Tokyo (JP); Hayashi, Kuniharu Oki Electric Industry Co., Ltd., Tokyo (JP)
(74) Representative: Veldhuizen, Albert Dirk Willem

(56) References cited:
- DE-A- 3 437 954
- US-A- 3 874 493
- US-A- 3 902 584
- US-A- 4 490 665

## Description

### Field of the invention

This invention relates to a method of controlling a stepping motor for line feed in a printer and a driver circuit for driving such a printer. Such a stepping motor is called a line-feed motor below.

### Background of the invention

Printers such as those used in automated office equipment have a line-feed motor for automatically line-feeding. When a line feed is to be made, the line-feed motor receives, on command from a host controller, pulses to cause it to rotate through an angle corresponding to the distance the media is to be fed. Driven by these pulses, the motor rotates and thereby feeds the printing medium by the amount instructed. After line-feeding, the line-feed motor is held by a certain holding torque, which is selected so as to be high enough to prevent the printing medium from being moved by outside forces, but low enough to permit the printing medium to be fed manually by the operator. This torque is in the order of 1/5 to 1/10 of the torque used to feed the printing medium, the exact value depending on the particular line-feed motor.

US 3902584 describes a printer in which a stepping motor drives the platen through a gear train which provides for a one-half line space movement of the platen for every four steps of the stepping motor. The stepping motor has an electromagnetic detent or holding torque occuring every four steps.

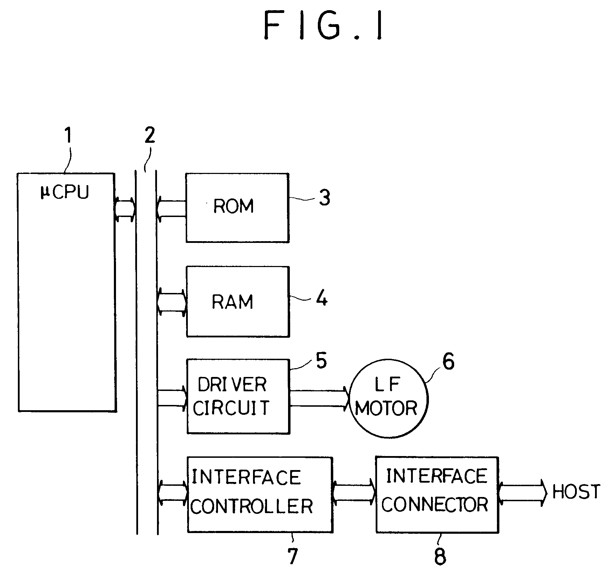

A block diagram of the printer's circuit configuration is shown in Figure 1. The microprocessor (µCPU) 1 communicates via an address/data bus 2 with a read-only memory (ROM) 3 and a random-access memory (RAM) 4 which it uses to control the printer's operation. The driver circuit 5 causes the line-feed motor 6 to rotate or to hold. The interface controller 7 receives commands from a host controller and sends printer information to the host via the interface connector 8.

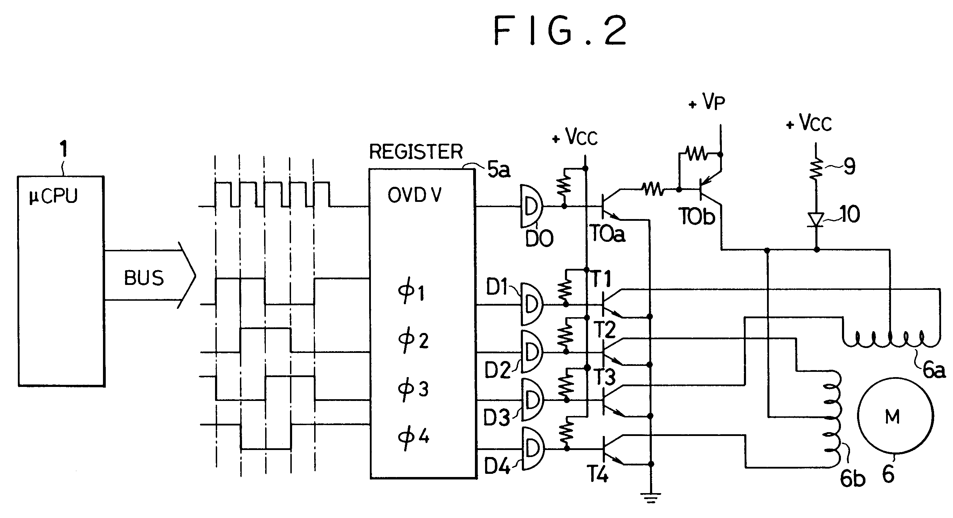

Figure 2 shows a specific example of the circuit configuration of the driver 5 in Figure 1. This circuit is well known, so a detailed explanation is omitted. It comprises a register 5a which receives timing signals from the microprocessor 1 and produces control signals OVDV, φ1, φ2, φ3 and φ4. These control signals are supplied through open-collector drivers D0, D1 to D4 to the bases of transistors T0a, T1 to T4 whose emitters are grounded. The collector of the transistor T0a is coupled to the base of an additional transistor T0b whose emitter is connected to an over-voltage drive power supply Vp (e.g. 38V). The collector of the transistor T0b is connected to centre taps of stator windings 6a, 6b. Ends of the windings 6a, 6b are connected to the collectors of the transistors T1 to T4. The centre taps of the windings 6a, 6b are also coupled through a diode 10, a resistor 9 to the logic-level power supply Vcc.

At the beginning of each cycle for each step, the open-collector drive D0, the transistors T0a and T0b are conductive by the control signal OVDV, and the over-drive power supply Vp is connected to the stator windings through the transistors T0b. When the transistor T0b is nonconductive, the power supply Vcc of the lower voltage supplies current to the stator windings 6a, 6b. This current produces holding torque when periodical and sequential alternation of the signals φ1 to φ4 has ended.

In the prior art shown in Figures 1 and 2 the printer operates as follows. When the interface controller 7 receives print data from the host via the interface connector 8, the microprocessor 1 first stores the data in the RAM 4. When the data for a line feed (or carriage return) are received, the printer prints one line of data by means of a print head and spacing mechanism not shown in the drawings. Then, if a line feed is to be performed, the signals φ1 to φ4 are alternated in sequence. The over-drive voltage Vp is applied in the former part of each cycle for each step. In the latter part of each cycle for each step, a lower voltage Vcc is applied. The voltages are used for rotating the line-feed motor 6. Thus the line-feed motor 6 is driven to feed the printing medium by the predetermined amount.

After the line-feed operation, the alternation of the signals φ1 to φ4 is terminated and the states of the signals φ1 to φ4 at the time of the termination of the alternation of the signals φ1 to φ4 are maintained. That is, two of the signals φ1 to φ4, that are at the high level at the time the alternation is terminated, are kept high and the other two of the signals φ1 to φ4, that are at the low level at the alternation is terminated, are kept low. As a result, the holding torque is generated in the line-feed motor 6 by the current which flows from the power supply Vcc through the resistor 9 and the diode. However in spite of the over-voltage drive problems due to step-out could occur.

### Summary of the Invention

The invention according to claims 1 and 6 has a method aspect and also a hardware aspect that is to say a circuit which may be used for implementing the method. The invention provides in a first aspect an improvement in a method of controlling a line-feed stepping motor in which the line feed motor is controlled by a driver circuit so as to generate a rotational torque for performing the line feed operation and a holding torque for preventing unwanted motion of the printing media. According to a second aspect of the invention the driver circuit is configured to generate a first holding torque of a magnitude permitting the operator to feed the printing medium manually, and a second holding torque larger than the first holding torque. The first holding torque is generated when the printer is in the ready state. The second holding torque is generated while the printer is printing and may be of such magnitude so as to provide sufficient torque to resist step-out under load fluctuations ocurring in normal operation which have to be allowed for.

This invention helps to overcome large load fluctuations on the printing medium caused by friction and other factors by generating two holding torques, a first holding torque and a stronger second holding torque, and applying the second holding torque during the printing operation. This method of control can reduce step-out thus improving operation.

### Drawings

Figure 1 is a block diagram of a prior art printer's circuit configuration;
Figure 2 is a schematic diagram of the driver circuit used in Figure 1;
Figure 3 is a schematic diagram of a driver circuit used in the invention;
Figure 4 shows the printer's operating modes, the state of the H̅O̅L̅D̅ signal, and the magnitude of the line-feed motor torque in each mode; and
Figure 5 is a flowchart showing the operation of the microprocessor 1 of Figure 3.

### Description of example of the invention

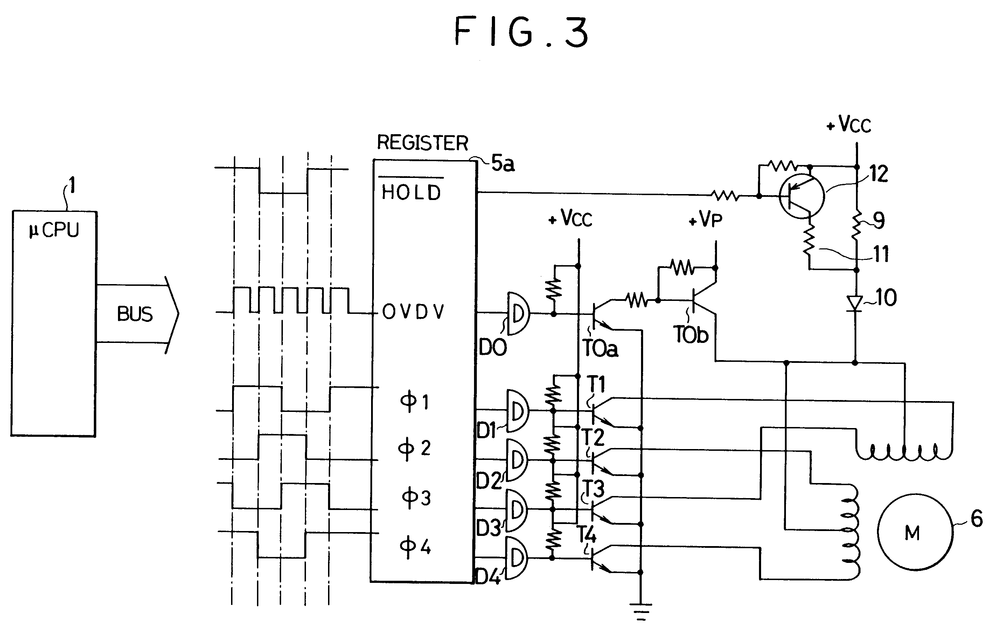

The features distinguishing the circuit of Figure 3 for use in the invention from the prior art circuit shown in Figure 2 are the addition of the resistor 11 and the transistor 12 and that the microprocessor 1 is modified to produce a control signal H̅O̅L̅D̅. Elements that are identical in Figure 2 and Figure 3 are identified by identical reference numbers. The resistor 11 and the transistor 12 are connected in parallel with the resistor 9. The control signal H̅O̅L̅D̅ switches the transistor 12 on and off. Assume that the states of the signals φ1 to φ4 are kept unchanged. When the H̅O̅L̅D̅ signal is set at the High level, and the transistor 12 is in the off state, the current fed to the line-feed motor 6 is determined only by the resistor 9 and the small holding torque is generated as it is in the prior art. This holding torque is so chosen as to prevent movement by external forces but to permit manual feeding. When the H̅O̅L̅D̅ signal is at the Low level, the transistor 12 is in the on state and in addition to the current fed through the resistor 9 as above, the line-feed motor 6 receives a current determined by the resistor 11, resulting in a stronger holding torque. This stronger holding torque is chosen to prevent step-out due to load variation. The value of this stronger holding torque can be set to any desired value simply by selecting the appropriate value of constant for the resistor 11.

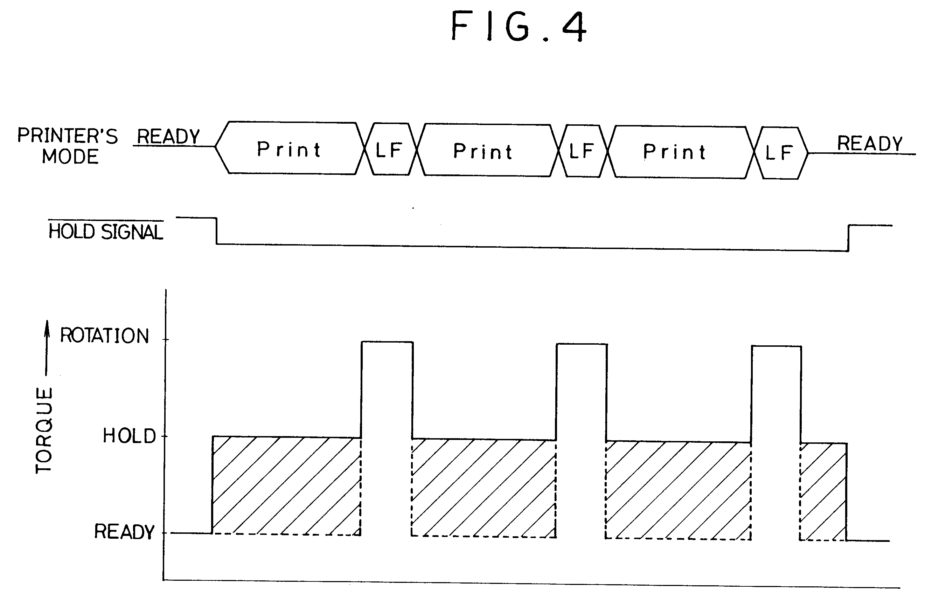

The operation of this embodiment is explained with reference to Figure 4. Figure 4 shows the printer's operating modes, the state of the HOLD signal, and the magnitude of the line-feed motor torque in each mode. Until it receives data from the host, the printer is in the ready state. The H̅O̅L̅D̅ signal is kept High to allow the operator to set the media by manual feeding. The holding torque of the line-feed motor 6 in this state has a small value. Next the printer receives data from the host and enters the printing mode or state to commence operations which include the printing of characters and spaces by a print head and spacing mechanism not shown in the drawing, and line-feed operations. The H̅O̅L̅D̅ signal goes Low when printing begins and remains Low until the end of the printing. i.e., when the last printing or line-feed operation is completed, and it is confirmed that there are no more data and the printer's next state will be the ready state; then the H̅O̅L̅D̅ signal returns to the High level. During printing operations, accordingly, the holding torque of the line-feed motor 6 increases to the H̅O̅L̅D̅ level in Figure 4. During line-feed operations over-voltage drive is performed. i.e., a large rotational torque is used to feed the printing media. While the printer in this embodiment is printing, the holding torque is the larger torque indicated by shading in Figure 4. This holding torque provides sufficient resistance to load fluctuations on the printing medium during the printing process to prevent step-out.

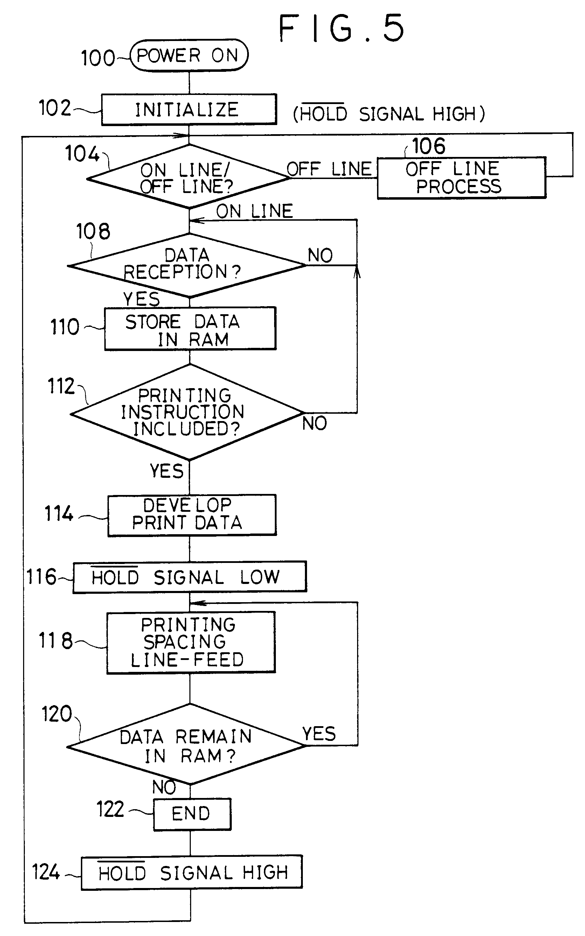

Figure 5 shows the operation of the microprocessor 1. When the microprocessor 1 is powered (100), initialization (102) is performed, by which the H̅O̅L̅D̅ signal is set High. Then it is checked whether the printer is set in the On-Line mode or the Off-Line mode, an off-line processing sub-routine is performed (106). If it is found that the printer is in the On-Line mode, the microprocessor 1 then waits for reception of data from the host. When it receives data, it stores the data in the RAM 4 (110). The micropocessor 1 then judges on whether the data includes the printing instruction (112). If the printing instruction is not included, the procedure returns to the step 108. When the printing instruction is included, the printing data are developed in the RAM (114), and the H̅O̅L̅D̅ signal is turned Low (116). Then printing, spacing and line-feed operations (118) are repeated until there remains no more printing data in the RAM (120). When there is no data in the RAM, the printing is terminated (122) and the HOLD signal is turned High (124). Then, the procedure is returned to the step 104.

The invention controls the line-feed motor of a printer so as to provide two holding torques: a first holding torque supplied while the printer is in the ready state, and a second holding torque supplied while the printer is printing. This method of control is capable of preventing the holding torque from being overcome by large fluctuations in load on the printing media caused by such factors as friction and electrostatic charge, thereby reducing any tendency to step-out. Load fluctuations can be more easily accomodated.

## Claims

1. A method of controlling a line-feed stepping motor (6) in a printer in which a printing medium is moved by the motor (6) during line-feed operation, and the motor (6) is stopped during printing operation and during a ready state in which the motor (6) is operated to generate a first holding torque for preventing unwanted movement of the printing medium while permitting the operator to feed the printing medium manually, characterised in that the line-feed stepping motor (6) is operated to generate during the printing operation a second holding torque which is greater than the first holding torque.

2. A method according to claim 1, further characterised in that the second holding torque is of a magnitude so that step-out due to operational load fluctuation is avoided.

3. A method according to claim 1 or claim 2 further characterised in that the first holding torque is of a magnitude so that it prevents unwanted movement of the printing medium due to an outside force smaller than the force exerted for manual feeding.

4. A method according to any of the preceding claims further characterised in that the printing state is a state which begins with receipt of a printing instruction by the printer and ends at the end of the printing operation.

5. A method according to any of the preceding claims further characterised in that the printing state is a state in which printing data are supplied to the printer.

6. A driver circuit (5) for a line-feed stepping motor (6) in a printer in which a printing medium is moved by the motor (6) during line-feed operation and the motor (6) is stopped during printing operation and during a ready state, the motor including stator windings (6a, 6b) and the driver circuit including a first resistor (9) for passing a first holding current to the stator windings (6a, 6b) for causing the motor (6) to generate a first holding torque for resisting unwanted movement of the printing medium while permitting manual feeding of the printing media, characterised by a series connection of a switching element (12) and a second resistor (11) connected in parallel with the first resistor (9), the arrangment being such that when the switching element (12) is conductive an additional current flows through the second resistor (11) which is added to the current through the first resistor (9) to generate a second holding current for the stator windings (6a, 6b), for causing the motor (6) to generate a second holding torque greater than the first holding torque, and means (5a) for making the switching element (12) conductive when the printer is in the printing state.

7. A driver circuit according to claim 6 further characterised in that the stator windings (6a, 6b) of the motor (6) have one end connected to a first power supply (GND) through respective switching elements (T1, T2, T3, T4), the driver circuit further includes means for making said switching elements (T1, T2, T3, T4) conductive in a predetermined sequence during the line-feed operation, and maintaining the states of the switching elements (T1, T2, T3, T4) at the time when the line-feed operation is terminated until a subsequent line-feed operation, and the stator windings (6a, 6b) of the motor (6) have the other end connected to a power supply (Vp) for over-voltage driving during rotational drive of the motor (6) and a power supply (Vcc) for rotational drive and for the holding.

8. A driver circuit according to claim 6 or claim 7 further characterised in that the printer has an interface controller (7) for receiving printing instructions, in response to which printing is started.

9. A driver circuit according to any of claims 6 to 8 further characterised in that the printer has an interface controller (7) to which printing data are supplied for the printing operation.

## Patentansprüche

1. Verfahren zum Steuern eines Zeilenvorschub-Schrittmotors (6) in einem Drucker, in dem ein Druckmedium durch den Motor (6) während eines Zeilenvorschub-Betriebs bewegt wird und wobei der Motor (6) während des Druckbetriebs und während eines Bereit-Zustands angehalten wird, wobei der Motor (6) betrieben wird, ein erstes Haltemoment zum Verhindern einer ungewollten Bewegung des Druckmediums zu erzeugen, während es dem Bediener erlaubt wird, das Druckmedium manuell zuzuführen, dadurch gekennzeichnet, daß der Zeilenvorschub-Motor (6) betrieben wird, während des Druckbetriebs ein zweites Haltemoment zu erzeugen, das größer als das erste Haltemoment ist.

2. Verfahren gemäß Anspruch 1, weiterhin dadurch gekennzeichnet, daß das zweite Haltemoment einen solchen Wert hat, daß ein Außer-Schritt-Kommen auf Grund betriebsmäßiger Lastfluktuationen vermieden wird.

3. Verfahren gemäß Anspruch 1 oder Anspruch 2, weiterhin dadurch gekennzeichnet, daß das erste Haltemoment einen solchen Wert hat, daß es eine ungewollte Bewegung des Druckmediums auf Grund einer äußeren Kraft verhindert, die kleiner als die Kraft ist, welche für eine manuelle Zuführung angelegt wird.

4. Verfahren gemäß einem der vorhergehenden Ansprüche, weiterhin dadurch gekennzeichnet, daß der Druckzustand ein Zustand ist, der mit Empfang eines Druckbefehls durch den Drucker beginnt und am Ende des Druckbetriebs endet.

5. Verfahren gemäß einem der vorhergehenden Ansprüche, weiterhin dadurch gekennzeichnet, daß der Druckzustand ein Zustand ist, in dem Daten dem Drucker zugeführt werden.

6. Treiberschaltung (5) für einen Zeilenvorschub-Schrittmotor (6) eines Druckers, in dem ein Druckmedium durch den Motor (6) während eines Zeilenvorschub-Betriebs bewegt wird und in dem der Motor (6) während des Druckbetriebs und während eines Bereit-Zustands angehalten wird, wobei der Motor Statorwicklungen (6a, 6b) enthält und die Treiberschaltung einen ersten Widerstand (9) zum Durchlassen eines ersten Haltestroms zu den Statorwicklungen (6a, 6b) enthält, um zu verursachen, daß der Motor (6) ein erstes Haltemoment zum Vermeiden einer ungewollten Bewegung des Druckmediums erzeugt, während eine manuelle Zuführung der Druckmedien erlaubt wird, gekennzeichnet durch eine Serienverbindung aus einem Schaltelement (12) und einem zweiten Widerstand (11), die parallel mit einem ersten Widerstand (9) verbunden sind, wobei die Anordnung derart ist, daß, wenn das Schaltelement (12) leitend ist, ein zusätzlicher Strom durch den zweiten Widerstand (11) fließt, der dem Strom durch den ersten Widerstand (9) hinzuaddiert wird, um einen zweiten Haltestrom für die Statorwicklungen (6a, 6b) zu erzeugen, damit der Motor (6) dazu gezwungen wird, ein zweites Haltemoment zu erzeugen, das größer als das erste Haltemoment ist, und eine Einrichtung (5a) zum Leitendmachen des Schaltelements (12) enthält, wenn der Drucker im Druckzustand ist.

7. Treiberschaltung gemäß Anspruch 6, weiterhin gekennzeichnet dadurch, daß die Statorwicklungen (6a, 6b) des Motors (6) mit einem Ende mit einer ersten Spannungsversorgung (GND) über entsprechende Schaltelemente (T1, T2, T3, T4) verbunden ist, daß die Treiberschaltung weiterhin eine Einrichtung zum Leitendmachen der Schaltelemente (T1, T2, T3, T4) in einer vorgegebenen Sequenz während des Zeilenvorschub-Betriebs und zum Beibehalten der Zustände der Schaltelemente (T1, T2, T3, T4) zu dem Zeitpunkt, wenn der Zeilenvorschub-Betrieb beendet ist, bis zu einer nachfolgenden Zeilenvorschub-Operation enthält, und daß die Statorwicklungen (6a, 6b) des Motors (6) mit dem anderen Ende mit einer Spannungsversorgung (Vp) zum Überspannungs-Antreiben während eines Drehantriebs des Motors (6) verbunden sind und mit einer Spannungsversorgung (Vcc) für den Drehantrieb und zum Halten verbunden sind.

8. Treiberschaltung gemäß Anspruch 6 oder Anspruch 7, die weiterhin dadurch gekennzeichnet ist, daß der Drucker einen Schnittstellen-Controller (7) zum Empfangen von Druckbefehlen hat, wobei in Antwort auf diese das Drucken gestartet wird.

9. Treiberschaltung gemäß einem der Ansprüche 6 bis 8, weiterhin dadurch gekennzeichnet, daß der Drucker einen Schnittstellen-Controller (7) hat, dem Druckdaten für den Druckbetrieb zugeführt werden.

## Revendications

1. Procédé de commande d'un moteur pas-à-pas de saut de ligne (6) dans une imprimante dans laquelle un support d'impression est déplacé par le moteur (6) pendant l'opération de saut de ligne, et le moteur (6) est arrêté pendant l'opération d'impression et, dans un état prêt, le moteur (6) est actionné de façon à générer un premier couple de maintien destiné à empêcher un déplacement indésirable du support d'impression tout en permettant à l'opérateur d'avancer manuellement le support d'impression, caractérisé en ce que le moteur pas-à-pas de saut de ligne (6) est actionné pendant l'opération d'impression afin de générer un deuxième couple de maintien qui est supérieur au premier couple de maintien.

2. Procédé selon la revendication 1, caractérisé en outre en ce que le deuxième couple de maintien est d'une amplitude telle que le dépassement dû à une fluctuation de charge opérationnelle est évité.

3. Procédé selon la revendication 1 ou la revendication 2, caractérisé en outre en ce que le premier couple de maintien est d'une amplitude telle qu'il empêche un déplacement indésirable du support d'impression dû à une force extérieure inférieure à la force exercée pour une avance manuelle.

4. Procédé selon l'une quelconque des revendications précédentes, caractérisé en outre en ce que l'état d'impression est un état qui commence avec la réception d'une instruction d'impression par l'imprimante et se termine à la fin de l'opération d'impression.

5. Procédé selon l'une quelconque des revendications précédentes, caractérisé en outre en ce que l'état d'impression est un état dans lequel des données d'impression sont transmises à l'imprimante.

6. Circuit de commande (5) pour un moteur pas-à-pas de saut de ligne (6) dans une imprimante dans laquelle un support d'impression est déplacé par le moteur (6) pendant l'opération de saut de ligne et le moteur (6) est arrêté pendant l'opération d'impression et dans un état prêt, le moteur comprenant des enroulements de stator (6a, 6b) et le circuit de commande comprenant une première résistance (9) destinée à laisser passer un premier courant de maintien vers les enroulements de stator (6a, 6b) afin d'amener le moteur (6) à générer un premier couple de maintien destiné à résister à un déplacement indésirable du support d'impression tout en permettant une avance manuelle du support d'impression, caractérisé par un branchement en série d'un élément de commutation (12) et d'une deuxième résistance (11) reliée en parallèle à la première résistance (9), l'agencement étant tel que, lorsque l'élément de commutation (12) est conducteur, un courant additionnel s'écoule à travers la deuxième résistance (11) et s'ajoute au courant à travers la première résistance (9) afin de générer un deuxième courant de maintien pour les enroulements de stator (6a, 6b) afin d'amener le moteur (6) à générer un deuxième couple de maintien supérieur au premier couple de maintien, et des moyens (5a) destinés à rendre l'élément de commutation (12) conducteur lorsque l'imprimante est dans l'état d'impression.

7. Circuit de commande selon la revendication 6, caractérisé en outre en ce que les enroulements de stator (6a, 6b) du moteur (6) ont une extrémité reliée à une première alimentation (GND) par l'intermédiaire d'éléments de commutation respectifs (T1, T2, T3, T4), le circuit de commande comprend en outre des moyens destinés à rendre lesdits éléments de commutation (T1, T2, T3, T4) conducteurs selon une séquence prédéterminée pendant l'opération de saut de ligne, et maintenant les états des éléments de commutation (T1, T2, T3, T4) au moment où l'opération de saut de ligne se termine jusqu'à une opération de saut de ligne suivante, et les enroulements de stator (6a, 6b) du moteur (6) ont l'autre extrémité reliée à une alimentation (Vp) pour une commande à surtension pendant l'entraînement en rotation du moteur (6) et à une alimentation (Vcc) pour un entraînement en rotation et pour le maintien.

8. Circuit de commande selon la revendication 6 ou la revendication 7, caractérisé en outre en ce que l'imprimante possède un circuit de commande d'interface (7) destiné à recevoir des instructions d'impression, l'impression commençant en réponse à celles-ci.

9. Circuit de commande selon l'une quelconque des revendications 6 à 8, caractérisé en outre en ce que l'imprimante possède un circuit de commande d'interface (7) auquel sont transmises les données d'impression pour l'opération d'impression.
